# EUROPEAN PATENT APPLICATION

(11) **EP 4 583 230 A1**
(43) Date of publication of application: **09.07.2025**
(21) Application number: 23874660.6
(22) Date of filing: 21.09.2023
(51) Int. Cl.: H01M 10/0567, H01G 11/06, H01G 11/64, H01M 4/13, H01M 10/052

(54) **NONAQUEOUS ELECTROLYTE POWER STORAGE ELEMENT**

(30) Priority: 04.10.2022 JP 2022160312
(71) Applicant: GS Yuasa International Ltd., Kisshoin, Minami-ku, Kyoto-shi, Kyoto 601-8520 (JP)
(72) Inventor: SHIMOMURA, Keiji, Kyoto-shi, Kyoto 601-8520 (JP)
(74) Representative: Isarpatent
(86) International application number: PCT/JP2023/034240
(87) International publication number: WO 2024/075531

(57) **Abstract**

A nonaqueous electrolyte energy storage device according to one aspect of the present invention includes: a negative electrode including a negative active material layer; and a nonaqueous electrolyte containing an unsaturated cyclic carbonate and a P-O bond-containing fluorophosphate, in which the negative active material layer has a BET specific surface area of 0.80 m²/g or more and 1.5 m²/g or less, and the ratio of the content of the unsaturated cyclic carbonate to the total content of the unsaturated cyclic carbonate and the P-O bond-containing fluorophosphate is 0.60 or more and less than 1.0 on a mole basis.

## Description

### TECHNICAL FIELD

The present invention relates to a nonaqueous electrolyte energy storage device.

### BACKGROUND ART

Nonaqueous electrolyte secondary batteries typified by lithium ion nonaqueous electrolyte secondary batteries are widely used in electronic devices such as personal computers and communication terminals, motor vehicles, and the like because the batteries are high in energy density. The nonaqueous electrolyte secondary batteries generally include an electrode assembly including a pair of electrodes electrically isolated by a separator, and a nonaqueous electrolyte interposed between the electrodes, and are configured to be charged and discharged by transferring charge carrier ions between both the electrodes. In addition, capacitors such as lithium ion capacitors and electric double-layer capacitors are also widely in use as nonaqueous electrolyte energy storage devices other than the nonaqueous electrolyte secondary batteries.

In general, the nonaqueous electrolyte of the nonaqueous electrolyte energy storage device contains a nonaqueous solvent and an electrolyte salt dissolved in the nonaqueous solvent. In this nonaqueous electrolyte, various additives and solvents are selected and used for improved performance.

### PRIOR ART DOCUMENT

### PATENT DOCUMENT

Patent Document 1: JP-A-2015-162304

### SUMMARY OF THE INVENTION

### PROBLEMS TO BE SOLVED BY THE INVENTION

In recent years, there has been a demand for a nonaqueous electrolyte energy storage device which has a higher capacity retention ratio after charge-discharge cycles and superior power performance in a low temperature environment. Patent Document 1 proposes improving a capacity retention ratio after charge-discharge cycles by devising components contained in an electrolyte solution. However, such a technique is insufficient to satisfy the required level regarding the capacity retention ratio after charge-discharge cycles and the power performance in a low temperature environment, and there is still room for improvement.

An object of the present invention is to provide a nonaqueous electrolyte energy storage device having an excellent capacity retention ratio after charge-discharge cycles and excellent power performance in a low temperature environment.

### MEANS FOR SOLVING THE PROBLEMS

A nonaqueous electrolyte energy storage device according to one aspect of the present invention includes: a negative electrode including a negative active material layer; and a nonaqueous electrolyte containing an unsaturated cyclic carbonate and a P-O bond-containing fluorophosphate, in which the negative active material layer has a BET specific surface area of 0.80 m²/g or more and 1.5 m²/g or less, and the ratio of the content of the unsaturated cyclic carbonate to the total content of the unsaturated cyclic carbonate and the P-O bond-containing fluorophosphate is 0.60 or more and less than 1.0 on a mole basis.

### ADVANTAGES OF THE INVENTION

The nonaqueous electrolyte energy storage device according to one aspect of the present invention can provide a nonaqueous electrolyte energy storage device having an excellent capacity retention ratio after charge-discharge cycles and excellent power performance in a low temperature environment.

### BRIEF DESCRIPTION OF THE DRAWINGS

Fig. 1 is a perspective oblique view illustrating an embodiment of a nonaqueous electrolyte energy storage device.
Fig. 2 is a schematic view illustrating an embodiment of an energy storage apparatus configured by assembling a plurality of nonaqueous electrolyte energy storage devices.

### MODE FOR CARRYING OUT THE INVENTION

First, the outline of a nonaqueous electrolyte energy storage device disclosed in the present specification is described.
[1] A nonaqueous electrolyte energy storage device according to one aspect of the present invention includes: a negative electrode including a negative active material layer; and a nonaqueous electrolyte containing an unsaturated cyclic carbonate and a P-O bond-containing fluorophosphate, in which the negative active material layer has a BET specific surface area of 0.80 m²/g or more and 1.5 m²/g or less, and the ratio of the content of the unsaturated cyclic carbonate to the total content of the unsaturated cyclic carbonate and the P-O bond-containing fluorophosphate is 0.60 or more and less than 1.0 on a mole basis.

When the BET specific surface area of the negative active material layer and the mole ratio of the unsaturated cyclic carbonate and the P-O bond-containing fluorophosphate are each in a specific range, the nonaqueous electrolyte energy storage device described in the above [1] has an excellent capacity retention ratio after charge-discharge cycles and excellent power performance in a low temperature environment. The reason for this is not clear, but is presumed as follows.

In the nonaqueous electrolyte of the nonaqueous electrolyte energy storage device, an unsaturated cyclic carbonate which is decomposed during charge to form a coating film on the particle surface of the negative active material may be used in the nonaqueous electrolyte in order to improve the capacity retention ratio after charge-discharge cycles. However, since the unsaturated cyclic carbonate forms a coating film having a uniform and dense surface, charge carrier ions (in the case of a lithium ion secondary battery, lithium ions) tend to be difficult to permeate through the coating film, and the power performance in a low temperature environment may be deteriorated. On the other hand, the P-O bond-containing fluorophosphate forms a coating film having a coarse surface, and thus charge carrier ions tend to easily permeate through the coating film. Thus, by combining an unsaturated cyclic carbonate and a P-O bond-containing fluorophosphate, the permeability of charge carrier ions through a coating film can be improved, and power performance in a low temperature environment can be enhanced.

According to the nonaqueous electrolyte energy storage device described in the above [1], when the BET specific surface area of the negative active material layer is 0.80 m²/g or more and 1.5 m²/g or less and the ratio (mole ratio) of the content of the unsaturated cyclic carbonate to the total content of the unsaturated cyclic carbonate and the oxyfluorophosphate is 0.60 or more and less than 1.0, the unsaturated cyclic carbonate and the oxyfluorophosphate are decomposed in a well-balanced manner to form a coating film on the particle surface of the negative active material, so that the moderately uniform and dense coating film can sufficiently cover the surface of the negative active material layer without becoming excessively thick while the permeability of charge carrier ions through the coating film is improved, and the power performance in a low temperature environment can be enhanced. In addition, as the charge-discharge cycle progresses, when the coating film on the particle surface fails to follow the expansion and shrinkage of the particles of the negative active material and cracks to generate a new surface of the negative active material, the unsaturated cyclic carbonate and the oxyfluorophosphate remaining in the nonaqueous electrolyte are further decomposed to grow the coating film, but even in such a case, the unsaturated cyclic carbonate and the oxyfluorophosphate are decomposed in a well-balanced manner and the coating film grows without becoming excessively thick, so that an increase in resistance is suppressed and a decrease in capacity retention ratio after charge-discharge cycles can be suppressed. This is considered to contribute to improvement of the capacity retention ratio after charge-discharge cycles and the power performance in a low temperature environment.

The "BET specific surface area" herein is determined by immersing a sample in liquid nitrogen, and measuring the pressure and the amount of adsorption at the time, based on the fact that nitrogen molecules are physically adsorbed on the particle surfaces by supplying a nitrogen gas. As a specific measurement method, the amount of nitrogen adsorption (m²) on the sample is determined by the single-point method. The value obtained by dividing the obtained amount of nitrogen adsorption by the mass (g) of the sample is defined as the BET specific surface area (m²/g).

[2] In the nonaqueous electrolyte energy storage device described in the above [1], the content of the unsaturated cyclic carbonate in the nonaqueous electrolyte may be 1.4 × 10⁻⁴ mol/dm³ or more and 2.8 × 10⁻⁴ mol/dm³ or less. In the nonaqueous electrolyte energy storage device described in the above [2], when the content of the unsaturated cyclic carbonate falls within the above range, the capacity retention ratio after charge-discharge cycles of the nonaqueous electrolyte energy storage device can be further improved. The content of the unsaturated cyclic carbonate in the nonaqueous electrolyte is determined using Gas Chromatography-Mass spectrometry (GC-MS).

[3] In the nonaqueous electrolyte energy storage device described in the above [1] or [2], the content of the P-O bond-containing fluorophosphate in the nonaqueous electrolyte may be 1.1 × 10⁻⁴ mol/dm³ or less. In the nonaqueous electrolyte energy storage device described in the above [3], when the content of the P-O bond-containing fluorophosphate falls within the above range, the power performance in a low temperature environment of the nonaqueous electrolyte energy storage device can be further improved. The content of the P-O bond-containing fluorophosphate in the nonaqueous electrolyte is determined using ion chromatography analysis.

[4] In the nonaqueous electrolyte energy storage device described in any one of the above [1] to [3], the unsaturated cyclic carbonate may be vinylene carbonate, and the P-O bond-containing fluorophosphate may be lithium difluorophosphate. In the nonaqueous electrolyte energy storage device described in the above [4], when the unsaturated cyclic carbonate is vinylene carbonate and the P-O bond-containing fluorophosphate is lithium difluorophosphate, the capacity retention ratio after charge-discharge cycles and the power performance in a low temperature environment of the nonaqueous electrolyte energy storage device can be further improved.

The configuration of a nonaqueous electrolyte energy storage device, the configuration of an energy storage apparatus, and a method for manufacturing the nonaqueous electrolyte energy storage device according to an embodiment of the present invention, and other embodiments are described in detail. It is to be noted that the names of the respective structural members (respective components) used in the respective embodiments may be different from the names of the respective structural members (respective components) used in BACKGROUND ART.

### <Configuration of nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is typically a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also referred to simply as a "secondary battery") is described as an example of the nonaqueous electrolyte energy storage device.

### (Positive electrode)

The positive electrode includes a positive substrate and a positive active material layer disposed on the positive substrate directly or with an intermediate layer interposed therebetween.

The positive substrate has conductivity. Whether the positive substrate has "conductivity" or not is determined with the volume resistivity of 10⁷ Ω ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, still more preferably 8 µm or more and 30 µm or less, particularly preferably 10 µm or more and 25 µm or less. When the average thickness of the positive substrate falls within the above range, it is possible to enhance the energy density per volume of the secondary battery while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder (binding agent), a thickener, or a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides having an α-NaFeO₂-type crystal structure, lithium-transition metal composite oxides having a spinel-type crystal structure, polyanion compounds, chalcogenides, and sulfur. Examples of the lithium-transition metal composite oxides having an α-NaFeO₂-type crystal structure include Li[LiₓNi₍₁₋ₓ₎]O₂ (0 ≤ x < 0.5), Li[LiₓNi_{y}Co_{(1-x-y)}]O₂ (0 ≤ x < 0.5, 0 < y < 1), Li[LiₓCo₍₁₋ₓ₎]O₂ (0 ≤ x < 0.5), Li[LiₓNi_{y}Mn_{(1-x-y)}]O₂ (0 ≤ x < 0.5, 0 < y < 1), Li[LiₓNi_{y}Mn_{β}Co_{(1-x-y-β)}]O₂ (0 ≤ x < 0.5, 0 < y, 0 < β, 0.5 < y + β < 1), and Li[LiₓNi_{y}Co_{β}Al_{(1-x-y-β)}]O₂ (0 ≤ x < 0.5, 0 < y, 0 < β, 0.5 < y + β < 1). Examples of the lithium-transition metal composite oxides having a spinel-type crystal structure include LiₓMn₂O₄ and LiₓNi_{y}Mn_{(2-y)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. Some of atoms or polyanions in these materials may be replaced with atoms or anion species composed of other elements. These materials may have surfaces coated with other materials. In the positive active material layer, one of these materials may be used singly, or two or more thereof may be used in mixture.

The positive active material is typically particles (powder). The average particle size of the positive active material is preferably 0.1 µm or more and 20 µm or less, for example. By setting the average particle size of the positive active material to be equal to or more than the above lower limit, the positive active material is easily manufactured or handled. By setting the average particle size of the positive active material to be equal to or less than the above upper limit, the electron conductivity of the positive active material layer is improved. In the case of using a composite of the positive active material and another material, the average particle size of the composite is regarded as the average particle size of the positive active material. The "average particle size" means a value corresponding to 50% in a volume-based cumulative distribution calculated, in accordance with JIS-Z-8819-2 (2001), from a particle size distribution obtained by measuring a diluted solution, which is obtained by diluting particles with a solvent, by a laser diffraction/scattering method in accordance with JIS-Z-8825 (2013).

A crusher, a classifier, or the like is used to obtain a powder with a predetermined particle size. Examples of a crushing method include methods of using a mortar, a ball mill, a sand mill, a vibratory ball mill, a planetary ball mill, a jet mill, a counter jet mill, a whirling airflow-type jet mill, a sieve, or the like. Wet-type crushing in which crushing is performed in the presence of water or an organic solvent such as hexane can also be used. As a classification method, a sieve, a wind classifier, or the like is used in a dry or wet manner, if necessary.

The content of the positive active material in the positive active material layer is preferably 50% by mass or more and 99% by mass or less, more preferably 70% by mass or more and 98% by mass or less, and still more preferably 80% by mass or more and 95% by mass or less. When the content of the positive active material falls within the above range, a balance can be achieved between the increased energy density and manufacturability of the positive active material layer.

The conductive agent is not particularly limited as long as the agent is a material having conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of a shape of the conductive agent include a powdery shape and a fibrous shape. As the conductive agent, one of these materials may be used singly, or two or more thereof may be used in mixture. These materials may be used in the form of a composite. For example, a composite material of carbon black and CNTs may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, and more preferably 3% by mass or more and 9% by mass or less. When the content of the conductive agent falls within the above range, the energy density of the secondary battery can be increased.

Examples of the binder include thermoplastic resins such as fluororesins (for example, polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, and more preferably 3% by mass or more and 9% by mass or less. When the content of the binder falls within the above range, the positive active material can be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals such as calcium fluoride, barium fluoride, and barium sulfate, nitrides such as aluminum nitride and silicon nitride, substances derived from mineral resources, such as talc, montmorillonite, boehmite, zeolite, apatite, kaolin, mullite, spinel, olivine, sericite, bentonite, and mica, and artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Nb, or W as a component other than the positive active material, the conductive agent, the binder, the thickener, or the filler.

### (Negative electrode)

The negative electrode includes a negative substrate and a negative active material layer disposed on the negative substrate directly or with an intermediate layer interposed therebetween. The configuration of the intermediate layer is not particularly limited, and for example, can be selected from the configurations exemplified for the positive electrode.

The negative substrate has conductivity. As a material of the negative substrate, a metal such as copper, nickel, stainless steel, nickel-plated steel, and aluminum, or an alloy thereof, a carbonaceous material, or the like is used. Among these materials, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative substrate falls within the above range, it is possible to enhance the energy density per volume of a secondary battery while increasing the strength of the negative substrate.

The negative active material layer includes a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, or the filler.

The negative active material can be appropriately selected from known negative active materials. As the negative active material for a lithium ion secondary battery, a material capable of occluding and releasing lithium ions is typically used. Examples of the negative active material include: metal Li; metals or metalloids such as Si and Sn; metal oxides or metalloid oxides such as Si oxide, Ti oxide, and Sn oxide; titanium-containing oxides such as Li₄Ti₅O₁₂, LiTiO₂, and TiNb₂O₇; polyphosphoric acid compounds; silicon carbide; and carbon materials such as graphite and non-graphitic carbon (graphitizable carbon or non-graphitizable carbon). Among these materials, graphite and non-graphitic carbon are preferable. In the negative active material layer, one of these materials may be used singly, or two or more thereof may be used in mixture.

The "graphite" refers to a carbon material in which the average lattice spacing (d₀₀₂) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material having stable physical properties can be obtained.

The "non-graphitic carbon" refers to a carbon material in which the average lattice spacing (d₀₀₂) of the (002) plane determined by an X-ray diffraction method before charge-discharge or in a discharged state is 0.34 nm or more and 0.42 nm or less. Examples of the non-graphitic carbon include non-graphitizable carbon and graphitizable carbon. Examples of the non-graphitic carbon include a resin-derived material, petroleum pitch or a petroleum pitch-derived material, petroleum coke or a petroleum coke-derived material, a plant-derived material, and an alcohol-derived material.

The "discharged state" herein means a state of the carbon material, as the negative active material, that has been discharged by sufficiently releasing lithium ions that can be occluded and released in association with charge-discharge. For example, the "discharged state" refers to a state where the open circuit voltage is 0.7 V or more in a monopolar battery in which a negative electrode containing a carbon material as a negative active material is used as a working electrode and metal Li is used as a counter electrode.

The "non-graphitizable carbon" refers to a carbon material in which the d₀₀₂ is 0.36 nm or more and 0.42 nm or less.

The "graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is Si, Sn, Si oxide, Sn oxide, or the like, the average particle size thereof may be 1 nm or more and 1 µm or less. By setting the average particle size of the negative active material to be equal to or more than the above lower limit, the negative active material is easily manufactured or handled. By setting the average particle size of the negative active material to be equal to or less than the above upper limit, the electron conductivity of the active material layer is improved. A crusher, a classifier, or the like is used to obtain a powder with a predetermined particle size. The crushing method and classification method can be selected from, for example, the methods exemplified for the positive electrode. When the negative active material is a metal such as metal Li, the negative active material may have the form of a foil.

The content of the negative active material in the negative active material layer is preferably 60% by mass or more and 99% by mass or less, and more preferably 90% by mass or more and 98% by mass or less. When the content of the negative active material falls within the above range, a balance can be achieved between the increased energy density and manufacturability of the negative active material layer.

The lower limit of the BET specific surface area of the negative active material layer is 0.80 m²/g, preferably 0.85 m²/g, and more preferably 0.90 m²/g. In some embodiments, the BET specific surface area of the negative active material layer may be 0.95 m²/g or more, or 1.00 m²/g or more. When the BET specific surface area of the negative active material layer is equal to or more than the above lower limit, the power performance in a low temperature environment can be improved. The upper limit of the BET specific surface area of the negative active material layer is 1.50 m²/g, preferably 1.30 m²/g, and more preferably 1.20 m²/g. In some embodiments, the BET specific surface area of the negative active material layer may be 1.15 m²/g or less, or 1.10 m²/g or less. When the BET specific surface area of the negative active material layer is equal to or less than the above upper limit, the capacity retention ratio after charge-discharge cycles can be improved. The BET specific surface area may be equal to or more than any of the above lower limits and equal to or less than any of the above upper limits.

The surface area of the negative active material layer can be, for example, 1.6 × 10² m² or more, and is preferably 1.7 × 10² m² or more, and more preferably 1.8 × 10² m² or more, although not particularly limited. The surface area of the negative active material layer can be, for example, 2.9 × 10² m² or less, and is preferably 2.6 × 10² m² or less, and more preferably 2.4 × 10² m² or less. The surface area of the negative active material layer is calculated from the product of the BET specific surface area of the negative active material layer and the mass of the negative active material layer. The surface area may be equal to or more than any of the above lower limits and equal to or less than any of the above upper limits. In the nonaqueous electrolyte energy storage device including the negative active material layer having such a surface area, the above-described effects (at least one of the effect of improving the capacity retention ratio after charge-discharge cycles or the effect of improving the power performance in a low temperature environment, preferably both of the effects) can be more favorably exhibited.

In the present specification, the BET specific surface area of the negative active material layer is measured by the following method. The amount (m²) of nitrogen adsorption on the sample is determined by the single-point method using a specific surface area measurement apparatus (trade name: MONOSORB) manufactured by YUASA IONICS Co., Ltd. The value obtained by dividing the obtained adsorption amount by the mass (g) of the sample is defined as the BET specific surface area (m²/g). In the measurement, gas adsorption by cooling using liquid nitrogen is performed. In addition, preheating is performed at 120°C for 15 minutes before the cooling. The amount of the measurement sample loaded is 0.5 g ± 0.1 g.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a composite material of these resins may be used.

The heat resistant particles contained in the heat resistant layer preferably have a mass loss of 5% or less in the case of temperature increase from room temperature to 500°C in an air atmosphere at 1 atm, and more preferably have a mass loss of 5% or less in the case of temperature increase from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or composites of these substances may be used singly, or two or more thereof may be used in mixture. Among these inorganic compounds, silicon oxide, aluminum oxide, or aluminosilicate is preferable from the viewpoint of safety of the energy storage device.

A porosity of the separator is preferably 80% by volume or less from the viewpoint of strength, and is preferably 20% by volume or more from the viewpoint of discharge performance. The "porosity" herein is a volume-based value, and means a value measured with a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte contains an unsaturated cyclic carbonate and a P-O bond-containing fluorophosphate. For the nonaqueous electrolyte, a nonaqueous electrolyte solution may be used. The nonaqueous electrolyte solution contains a nonaqueous solvent and an electrolyte salt dissolved in the nonaqueous solvent in addition to the unsaturated cyclic carbonate and the P-O bond-containing fluorophosphate as additives.

The nonaqueous solvent can be appropriately selected from known nonaqueous solvents. Examples of the nonaqueous solvents include saturated cyclic carbonates, chain carbonates, carboxylic acid esters, phosphoric acid esters, sulfonic acid esters, ethers, amides, and nitriles. As the nonaqueous solvent, those in which some of the hydrogen atoms included in these compounds are replaced with halogen may be used.

Examples of the saturated cyclic carbonates include ethylene carbonate (EC), propylene carbonate (PC), butylene carbonate (BC), chloroethylene carbonate, fluoroethylene carbonate (FEC), and difluoroethylene carbonate (DFEC). Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among these carbonates, EMC is preferable.

As the nonaqueous solvent, it is preferable to use the saturated cyclic carbonate or the chain carbonate, and it is more preferable to use the saturated cyclic carbonate and the chain carbonate in combination. By using the saturated cyclic carbonate, dissociation of the electrolyte salt can be promoted to improve the ionic conductivity of the nonaqueous electrolyte solution. By using the chain carbonate, viscosity of the nonaqueous electrolyte solution can be kept low. When the saturated cyclic carbonate and the chain carbonate are used in combination, the volume ratio of the saturated cyclic carbonate to the chain carbonate (saturated cyclic carbonate : chain carbonate) preferably falls within the range from 5 : 95 to 50 : 50, for example.

The electrolyte salt can be appropriately selected from known electrolyte salts. Examples of the electrolyte salts include lithium salts, sodium salts, potassium salts, magnesium salts, and onium salts. Among these salts, the lithium salts are preferable.

Examples of the lithium salts include inorganic lithium salts such as LiPF₆, LiBF₄, LiClO₄, and LiN(SO₂F)₂, lithium oxalates such as lithium bis(oxalato)borate (LiBOB), and lithium difluorooxalatoborate (LiFOB), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these salts, inorganic lithium salts are preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. When the content of the electrolyte salt falls within the above range, the ionic conductivity of the nonaqueous electrolyte solution can be increased.

The nonaqueous electrolyte solution contains an unsaturated cyclic carbonate and a P-O bond-containing fluorophosphate as additives in addition to the nonaqueous solvent and the electrolyte salt. When the nonaqueous electrolyte contains an unsaturated cyclic carbonate and a P-O bond-containing fluorophosphate, the capacity retention ratio after charge-discharge cycles and the power performance in a low temperature environment can be improved.

The unsaturated cyclic carbonate and the P-O bond-containing fluorophosphate contained in the nonaqueous electrolyte used in the manufacture of the nonaqueous electrolyte energy storage device are partially decomposed to form a coating film on the particle surface of the negative active material as described above during initial charge-discharge, but the unsaturated cyclic carbonate and the fluorophosphate which have not been decomposed in the initial charge-discharge remain in the nonaqueous electrolyte. That is, the contents of the unsaturated cyclic carbonate and the P-O bond-containing fluorophosphate in the present invention mean the remaining amounts of the unsaturated cyclic carbonate and the fluorophosphate in the nonaqueous electrolyte, which have not been decomposed in the initial charge-discharge.

The unsaturated cyclic carbonate is not particularly limited as long as it is a cyclic compound having a carbonate structure (-O-(C=O)-O-) and a double bond or a triple bond in the molecule, but may be a cyclic carbonate having a carbon-carbon double bond in the molecule. The unsaturated cyclic carbonate is decomposed during initial charge-discharge, and a uniform and dense coating film can be formed on the particle surface of the negative active material due to the contribution of the double bond or the triple bond in the molecule. Examples of the unsaturated cyclic carbonate include cyclic carbonates having a carbon-carbon double bond in a cyclic structure, and cyclic carbonates having a carbon-carbon double bond in a moiety other than the cyclic structure. As the unsaturated cyclic carbonate, an unsaturated cyclic carbonate having three to fifteen carbon atoms (for example, from three to twelve, preferably from three to nine, and more preferably from three to six) may be preferably employed. The number of carbon-carbon double bonds of the unsaturated cyclic carbonate is not particularly limited as long as it is one or more, but may be, for example, one to three, and preferably one or two (for example, one). The unsaturated cyclic carbonate may be one in which some or all of the hydrogen atoms are replaced with other groups or atoms (for example, fluorine atoms). The unsaturated cyclic carbonate herein is a concept encompassing each geometric isomer thereof.

Suitable examples of the cyclic carbonate having a carbon-carbon double bond in a cyclic structure include a compound represented by the following general formula (1).

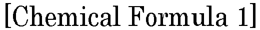

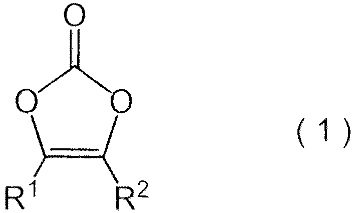

Here, R¹ and R² in the general formula (1) are each independently selected from the group consisting of a hydrogen atom, a fluorine atom, and an alkyl group or an aryl group which may be substituted by a fluorine atom. Alternatively, R¹ and R² may be bonded to each other to form an aromatic ring or an aliphatic ring. In the above compound, at least one (for example, both) of two substituents R¹ and R² on the carbon atom constituting the heterocycle may be a hydrogen atom or a fluorine atom. At least one of R¹ or R² may be an alkyl group having one to six (for example, one to four, typically one or two) carbon atoms or an aryl group. R¹ and R² may be linear or branched. In addition, R¹ and R² each may be a group having a structure in which one or two or more of the hydrogen atoms of the alkyl chain skeleton are replaced with fluorine atoms (that is, a fluorinated alkyl group having one to six carbon atoms). Suitable examples of the compound represented by the general formula (1) include a structure in which one of R¹ or R² is a hydrogen atom and the other is a fluorine atom: a structure in which one of R¹ or R² is a hydrogen atom and the other is an alkyl group having four carbon atoms or less: a structure in which one of R¹ or R² is a hydrogen atom and the other is a fluorinated alkyl group having four carbon atoms or less: and a structure in which both of R¹ and R² are hydrogen atoms. Specific examples of such a compound represented by the general formula (1) include vinylene carbonate (VC), fluorovinylene carbonate, methylvinylene carbonate, fluoromethylvinylene carbonate, ethylvinylene carbonate, propylvinylene carbonate, butylvinylene carbonate, dimethylvinylene carbonate, diethylvinylene carbonate, dipropylvinylene carbonate, trifluoromethylvinylene carbonate, catechol carbonate, 1-phenylvinylene carbonate, and 1,2-diphenylvinylene carbonate.

Examples of the cyclic carbonate having a carbon-carbon double bond in a moiety other than the cyclic structure include vinylethylene carbonate (VEC) and styrene carbonate.

As the unsaturated cyclic carbonate, a cyclic carbonate having a carbon-carbon double bond in a cyclic structure is preferable, and vinylene carbonate (VC) is more preferable. The unsaturated cyclic carbonates can be used singly, or in mixture of two or more kinds thereof.

As the P-O bond-containing fluorophosphate, a compound in which at least one oxygen atom and at least one fluorine atom are bonded to a pentavalent phosphorus atom can be used. The number of oxygen atoms bonded to the phosphorus atom may be, for example, one to four (preferably two or three). The number of fluorine atoms bonded to the phosphorus atom may be, for example, one to four (preferably one or two). As the P-O bond-containing fluorophosphate, a P=O bond-containing fluorophosphate is preferable, and for example, various salts having a monofluorophosphate anion (PO₃F²⁻) or a difluorophosphate anion (PO₂F₂⁻) can be used. The P-O bond-containing fluorophosphate is decomposed during initial charge-discharge, and a coarse coating film can be formed on the particle surface of the negative active material due to the contribution of the P-O bond and the fluorine atom in the molecule. The cation in the fluorophosphate is not particularly limited, and may be an inorganic cation or an organic cation. Specific examples of the inorganic cation include cations of alkali metal elements such as Li, Na, and K, and cations of alkaline earth metal elements such as Be, Mg, and Ca. Specific examples of the organic cation include an ammonium cation (ammonium ion). Among these cations, a lithium cation (lithium ion) is preferable. Suitable examples of such a fluorophosphate include lithium monofluorophosphate, lithium difluorophosphate (LiDFP), lithium tetrafluorophosphate, sodium difluorophosphate, and lithium bis(oxalato)difluorophosphate (LiFOP). Among these fluorophosphates, lithium difluorophosphate (LiDFP) is preferable.

The lower limit of the mole ratio of the unsaturated cyclic carbonate to the total content of the unsaturated cyclic carbonate and the P-O bond-containing fluorophosphate is 0.60, preferably 0.62, and more preferably 0.65. In some embodiments, the mole ratio of the unsaturated cyclic carbonate to the total content of the unsaturated cyclic carbonate and the P-O bond-containing fluorophosphate may be 0.66 or more, or 0.68 or more. The upper limit of the mole ratio of the unsaturated cyclic carbonate is less than 1.0, more preferably 0.90, and still more preferably 0.80. From the viewpoint that power performance in a low temperature environment is improved, the mole ratio of the unsaturated cyclic carbonate to the total content of the unsaturated cyclic carbonate and the P-O bond-containing fluorophosphate may be 0.75 or less, or 0.70 or less. When the content of the unsaturated cyclic carbonate falls within the above range, the nonaqueous electrolyte energy storage device has an excellent capacity retention ratio after charge-discharge cycles and excellent power performance in a low temperature environment. The mole ratio of the unsaturated cyclic carbonate to the total content of the unsaturated cyclic carbonate and the P-O bond-containing fluorophosphate may be equal to or more than any of the above lower limits and equal to or less than any of the above upper limits.

The content (molar concentration) of the unsaturated cyclic carbonate in the nonaqueous electrolyte is not particularly limited as long as the ratio (mole ratio) of the content of the unsaturated cyclic carbonate to the total content of the unsaturated cyclic carbonate and the P-O bond-containing fluorophosphate satisfies 0.60 or more and less than 1.0, but the lower limit thereof is preferably 1.4 × 10⁻⁴ mol/dm³, more preferably 1.5 × 10⁻⁴ mol/dm³, and still more preferably 1.6 × 10⁻⁴ mol/dm³. The upper limit of the content of the unsaturated cyclic carbonate is preferably less than 2.8 × 10⁻⁴ mol/dm³, more preferably 2.5 × 10⁻⁴ mol/dm³, and still more preferably 2.2 × 10⁻⁴ mol/dm³. When the content of the unsaturated cyclic carbonate falls within the above range, the capacity retention ratio after charge-discharge cycles can be further improved. The content of the unsaturated cyclic carbonate may be equal to or more than any of the above lower limits and equal to or less than any of the above upper limits. The content of the unsaturated cyclic carbonate means the amount (amount by mole) of the unsaturated cyclic carbonate contained in 1 dm³ of the nonaqueous electrolyte. When a plurality of kinds of unsaturated cyclic carbonates are contained, the content of the unsaturated cyclic carbonate means the total amount (total amount by mole) of the plurality of unsaturated cyclic carbonates contained in 1 dm³ of the nonaqueous electrolyte. Hereinafter, the same applies to the content of the P-O bond-containing fluorophosphate.

The content (molar concentration) of the P-O bond-containing fluorophosphate in the nonaqueous electrolyte is not particularly limited as long as the ratio (mole ratio) of the content of the unsaturated cyclic carbonate to the total content of the unsaturated cyclic carbonate and the P-O bond-containing fluorophosphate satisfies 0.60 or more and less than 1.0, but the lower limit thereof is preferably 6.6 × 10⁻⁵ mol/dm³, more preferably 7.0 × 10⁻⁵ mol/dm³, and still more preferably 7.4 × 10⁻⁵ mol/dm³. The upper limit of the content of the P-O bond-containing fluorophosphate is preferably 1.1 × 10⁻⁴ mol/dm³, more preferably 9.6 × 10⁻⁵ mol/dm³, and still more preferably 8.2 × 10⁻⁵ mol/dm³. When the content of the P-O bond-containing fluorophosphate falls within the above range, the power performance in a low temperature environment of the nonaqueous electrolyte energy storage device can be further improved. The content of the P-O bond-containing fluorophosphate may be equal to or more than any of the above lower limits and equal to or less than any of the above upper limits.

The difference between the content (molar concentration) of the unsaturated cyclic carbonate in the nonaqueous electrolyte and the content (molar concentration) of the P-O bond-containing fluorophosphate in the nonaqueous electrolyte is not particularly limited as long as the ratio (mole ratio) of the content of the unsaturated cyclic carbonate to the total content of the unsaturated cyclic carbonate and the P-O bond-containing fluorophosphate satisfies 0.60 or more and less than 1.0, but is preferably 7.4 × 10⁻⁵ mol/dm³ or more, and more preferably 8.6 × 10⁻⁵ mol/dm³ or more. The difference between the content of the unsaturated cyclic carbonate in the nonaqueous electrolyte and the content of the P-O bond-containing fluorophosphate in the nonaqueous electrolyte is preferably 1.7 × 10⁻⁴ mol/dm³ or less, more preferably 1.5 × 10⁻⁴ mol/dm³ or less, and still more preferably 1.4 × 10⁻⁴ mol/dm³ or less.

The total content (total molar concentration) of the unsaturated cyclic carbonate and the P-O bond-containing fluorophosphate is not particularly limited as long as the ratio (mole ratio) of the content of the unsaturated cyclic carbonate to the total content of the unsaturated cyclic carbonate and the P-O bond-containing fluorophosphate satisfies 0.6 or more and less than 1.0, but the lower limit thereof is preferably 2.1 × 10⁻⁴ mol/dm³, more preferably 2.2 × 10⁻⁴ mol/dm³, and still more preferably 2.3 × 10⁻⁴ mol/dm³. The upper limit of the total content of the unsaturated cyclic carbonate and the P-O bond-containing fluorophosphate is preferably 3.9 × 10⁻⁴ mol/dm³, more preferably 3.5 × 10⁻⁴ mol/dm³, and still more preferably 3.0 × 10⁻⁴ mol/dm³. The total content may be equal to or more than any of the above lower limits and equal to or less than any of the above upper limits. When the total content of the unsaturated cyclic carbonate and the P-O bond-containing fluorophosphate falls within the above range, the above-described effects (at least one of the effect of improving the capacity retention ratio after charge-discharge cycles or the effect of improving the power performance in a low temperature environment, preferably both of the effects) can be more favorably exhibited.

When the unsaturated cyclic carbonate is vinylene carbonate (VC), the content (mass basis) of vinylene carbonate in the nonaqueous electrolyte may be, for example, more than 1.00% by mass. The content of vinylene carbonate is preferably 1.05% by mass or more, and more preferably 1.10% by mass or more. In some embodiments, the content of vinylene carbonate may be, for example, 1.15% by mass, or more or 1.20% by mass or more. In addition, the content (mass basis) of vinylene carbonate in the nonaqueous electrolyte may be, for example, 2.00% by mass or less. The content of vinylene carbonate is preferably 1.80% by mass or less, and more preferably 1.70% by mass or less. In some embodiments, the content of vinylene carbonate may be, for example, 1.58% by mass or less, or 1.30% by mass or less. The content of vinylene carbonate may be equal to or more than any of the above lower limits and equal to or less than any of the above upper limits. When the content of vinylene carbonate falls within the above range, the above-described effects (at least one of the effect of improving the capacity retention ratio after charge-discharge cycles or the effect of improving the power performance in a low temperature environment, preferably both of the effects) can be more favorably exhibited.

When the P-O bond-containing fluorophosphate is lithium difluorophosphate (LiDFP), the content (mass basis) of lithium difluorophosphate in the nonaqueous electrolyte may be, for example, less than 1.00% by mass. The content of lithium difluorophosphate is preferably 0.90% by mass or less, and more preferably 0.80% by mass or less. In some embodiments, the content of lithium difluorophosphate may be, for example, 0.75% by mass or less, or 0.72% by mass or less. The content (mass basis) of lithium difluorophosphate in the nonaqueous electrolyte may be, for example, 0.10% by mass or more. The content of lithium difluorophosphate is preferably 0.30% by mass or more, and more preferably 0.50% by mass or more. In some embodiments, the content of lithium difluorophosphate may be, for example, 0.67% by mass or more, or 0.70% by mass or more. The content of lithium difluorophosphate may be equal to or more than any of the above lower limits and equal to or less than any of the above upper limits. When the content of lithium difluorophosphate falls within the above range, the above-described effects (at least one of the effect of improving the capacity retention ratio after charge-discharge cycles or the effect of improving the power performance in a low temperature environment, preferably both of the effects) can be more favorably exhibited.

The nonaqueous electrolyte may contain other additives in addition to the unsaturated cyclic carbonate and the P-O bond-containing fluorophosphate. Examples of such other additives include: oxalates such as lithium bis(oxalato)borate (LiBOB) and lithium difluorooxalatoborate (LiFOB); imide salt such as lithium bis(fluorosulfonyl)imide (LiFSI); aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated forms of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propenesultone, 1,3-propanesultone, 1,4-butanesultone, 1,4-butenesultone, perfluorooctane, tristrimethylsilyl borate, tristrimethylsilyl phosphate, and tetrakistrimethylsilyl titanate. These additives may be used singly, or in mixture of two or more kinds thereof. The other components may be used singly, or in mixture of two or more kinds thereof.

The total content of the additives (the unsaturated cyclic carbonate, the P-O bond-containing fluorophosphate, and other additives, that is, components other than the nonaqueous solvent or the electrolyte salt) contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. When the total content of the additives falls within the above range, it is possible to improve capacity retention performance or cycle performance after high-temperature storage, and to further improve safety.

The shape of the nonaqueous electrolyte energy storage device according to the present embodiment is not particularly limited, and examples thereof include cylindrical batteries, prismatic batteries, flat batteries, coin batteries, and button batteries.

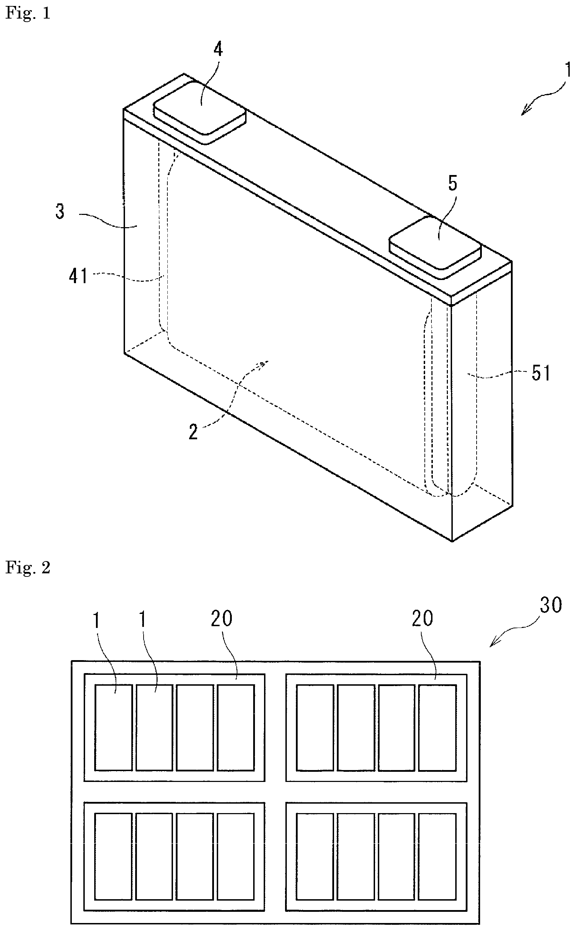

Fig. 1 illustrates a nonaqueous electrolyte energy storage device 1 as an example of prismatic batteries. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EVs), hybrid vehicles (HEVs), and plug-in hybrid vehicles (PHEVs), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1, a busbar (not illustrated) for electrically connecting two or more energy storage units 20, and the like. The energy storage unit 20 or the energy storage apparatus 30 may include a state monitor (not illustrated) that monitors the state of one or more nonaqueous electrolyte energy storage devices 1.

### <Method for manufacturing nonaqueous electrolyte energy storage device>

The method for manufacturing the nonaqueous electrolyte energy storage device according to an embodiment of the present invention is not particularly limited, but for example, the following manufacturing method can be adopted.

The manufacturing method includes: preparing a negative electrode including a negative active material layer; preparing a nonaqueous electrolyte containing an unsaturated cyclic carbonate and a P-O bond-containing fluorophosphate; and initially charging and discharging an uncharged and undischarged energy storage device assembled using the negative electrode and the nonaqueous electrolyte.

The step of preparing a negative electrode can be performed by, for example, stacking the negative active material layer along at least one surface of the negative substrate through applying a negative composite to the negative substrate. Specifically, for example, the negative active material layer can be stacked by applying a negative composite to the negative substrate and drying the negative composite.

The negative composite contains a negative active material. The negative composite may be a negative composite paste further containing a dispersion medium in addition to the negative active material and the above-described optional components constituting the negative active material layer. As the dispersion medium, an organic solvent such as N-methylpyrrolidone (NMP) or toluene, water, or the like can be used.

In the step of preparing a nonaqueous electrolyte, a nonaqueous electrolyte can be prepared by mixing the above-described components constituting a nonaqueous electrolyte, such as an unsaturated cyclic carbonate, a P-O bond-containing fluorophosphate, an electrolyte salt, and a nonaqueous solvent.

The manufacturing method may further include preparing a positive electrode, stacking the positive electrode and the negative electrode with a separator interposed therebetween to obtain an electrode assembly, housing the electrode assembly in a case, injecting the nonaqueous electrolyte into the case, and the like. Thereafter, the injection port is sealed, thereby obtaining an uncharged and undischarged energy storage device.

The obtained uncharged and undischarged energy storage device is charged and discharged once or a plurality of times as initial charge-discharge. As a result, the unsaturated cyclic carbonate and the P-O bond-containing fluorophosphate in the nonaqueous electrolyte prepared in the step of nonaqueous electrolyte preparation are partially decomposed, and a coating film is formed on the particle surface of the negative active material.

In the initial charge-discharge, for example, constant current constant voltage (CCCV) charge at a charge current of 1.0 C and an end-of-charge voltage of 4.10 V is performed, and constant current (CC) discharge at a discharge current of 1.0 C and an end-of-discharge voltage of 2.75 V is performed.

### <Other embodiments>

The nonaqueous electrolyte energy storage device according to the present invention is not limited to the embodiments, and various changes may be made without departing from the scope of the present invention. For example, to the configuration of an embodiment, the configuration of another embodiment can be added, or a part of the configuration of an embodiment can be replaced with the configuration of another embodiment or a well-known technique. Further, a part of the configuration of an embodiment can be removed. In addition, a well-known technique can be added to the configuration of an embodiment.

While a case where the nonaqueous electrolyte energy storage device is used as a chargeable and dischargeable nonaqueous electrolyte secondary battery (for example, lithium ion secondary battery) has been described in the embodiments, the kind, shape, dimensions, capacity, and the like of the nonaqueous electrolyte energy storage device are not particularly limited. The present invention can also be applied to various secondary batteries, and capacitors such as an electric double layer capacitor and a lithium ion capacitor.

In the embodiments, the electrode assembly including a positive electrode and a negative electrode stacked with a separator interposed therebetween has been described, but the electrode assembly does not necessarily include a separator. For example, the positive electrode and the negative electrode may be brought into direct contact with each other, with a non-conductive layer formed on the active material layer of the positive electrode or negative electrode.

### EXAMPLES

Hereinafter, the present invention is described more specifically with reference to examples. The present invention is not limited to the following examples.

### [Example 1]

### (Preparation of negative electrode)

A negative composite paste, containing graphite as a negative active material, SBR as a binder, and CMC as a thickener with water as a dispersion medium, was prepared. The ratio of the negative active material, the binder, and the thickener was 97 : 2 : 1 as the mass ratio in terms of solid content. The negative composite paste was applied to both surfaces of a copper foil having an average thickness of 10 µm as a negative substrate, and dried. Thereafter, pressing was performed to form a negative active material layer, thereby obtaining a negative electrode. The BET specific surface area of the negative active material layer in the obtained negative electrode was 1.085 m²/g.

### (Preparation of positive electrode)

A positive composite paste, containing LiMn₂O₄ and LiNi_{0 33}Co_{0.33}Mn_{0.33}O₂ as positive active materials, PVDF as a binder, and acetylene black as a conductive agent with NMP as a dispersion medium, was prepared. The ratio of the positive active material, the binder, and the conductive agent was 93.5 : 3.5 : 3 as the mass ratio in terms of solid content. The ratio of LiMn₂O₄ to LiNi_{0.33}Co_{0.33}Mn_{0.33}O₂ was 70 : 30 as the mass ratio. The positive composite paste was applied to both surfaces of an aluminum foil as a positive substrate, and dried. Thereafter, pressing was performed to form a positive active material layer. Thus, a positive electrode in which a positive active material layer was stacked on each of both surfaces of a positive substrate was obtained.

### (Preparation of nonaqueous electrolyte)

Lithium hexafluorophosphate (LiPF₆) as an electrolyte salt was mixed in an amount to yield a content of 1.0 mol/dm³ with a nonaqueous solvent obtained by mixing ethylene carbonate and ethyl methyl carbonate at a volume ratio of 25 : 75. Vinylene carbonate (VC) as an unsaturated cyclic carbonate and lithium difluorophosphate (LiDFP) as a P-O bond-containing fluorophosphate were mixed as additives with this mixed solution to prepare a nonaqueous electrolyte. The content of vinylene carbonate in the nonaqueous electrolyte was 1.5% by mass, and the content of lithium difluorophosphate was 1.0% by mass.

### (Assembly of nonaqueous electrolyte energy storage device)

The positive electrode, the negative electrode, and a polyethylene separator having a thickness of 30 µm were stacked and wound to prepare a wound-type electrode assembly. The wound-type electrode assembly was housed in a case. Subsequently, the nonaqueous electrolyte was injected into the case, and the injection port was sealed to obtain an uncharged and undischarged energy storage device.

### (Initial charge-discharge)

The obtained uncharged and undischarged energy storage device was subjected to constant current constant voltage (CCCV) charge until the charge time reached a total of 3 hours under the conditions of a charge current of 1.0 C and an end-of-charge voltage of 4.1 V in a thermostatic bath at 25°C. Thereafter, a rest period of 10 minutes was provided. Then, constant-current (CC) discharging was performed under the conditions of a discharge current of 1.0 C and an end-of-discharge voltage of 2.75 V. After the above initial charge-discharge, a nonaqueous electrolyte energy storage device of Example 1 was obtained.

### [Example 2 and Comparative Examples 1 to 6]

Nonaqueous electrolyte energy storage devices of Example 2, Comparative Example 1, and Comparative Example 2 were obtained similarly to Example 1 except that the content of vinylene carbonate in the nonaqueous electrolyte was changed to 2% by mass in Example 2, 0.5% by mass in Comparative Example 1, and 1.0% by mass in Comparative Example 2. Nonaqueous electrolyte energy storage devices of Comparative Example 3 to Comparative Example 6 were obtained similarly to Example 1 except that the content of vinylene carbonate in the nonaqueous electrolyte was 0.5% by mass in Comparative Example 3, 1.0% by mass in Comparative Example 4, 1.5% by mass in Comparative Example 5, and 2.0% by mass in Comparative Example 6, and the BET specific surface area of each negative active material layer was 0.665 m²/g.

### (Measurement of contents (remaining amounts) of additives after initial charge-discharge)

For the nonaqueous electrolyte taken out by disassembling each nonaqueous electrolyte energy storage device after the initial charge-discharge, the content (remaining amount) of vinylene carbonate was measured using gas chromatography-mass spectrometry (GC-MS). In addition, the content (remaining amount) of lithium difluorophosphate was measured for the taken out nonaqueous electrolyte using ion chromatography analysis.

### [Evaluation]

### (Capacity retention ratio after charge-discharge cycles)

### (1) Initial discharge capacity confirmation test

Each of the nonaqueous electrolyte energy storage devices was subjected to constant current constant voltage (CCCV) charge until the charge time reached a total of 3 hours under the conditions of a charge current of 1.0 C and an end-of-charge voltage of 4.10 V in a thermostatic bath at 25°C, followed by a rest period of 5 minutes. Thereafter, constant current (CC) discharge was performed under the conditions of a discharge current of 1.0 C and an end-of-discharge voltage of 2.75 V. The discharge capacity at this time was defined as an "initial discharge capacity".

### (2) Charge-discharge cycle test

Each of the nonaqueous electrolyte energy storage devices after the measurement of "initial discharge capacity" was subjected to constant current constant voltage (CCCV) charge until the charge current reached 0.01 C or less under the conditions of a charge current of 1.0 C and an end-of-charge voltage of 4.10 V in a thermostatic bath at 0°C, followed by a rest period of 10 minutes. Thereafter, constant current (CC) discharge was performed under the conditions of a discharge current of 1.0 C and an end-of-discharge voltage of 2.75 V, followed by a rest period of 10 minutes. This charge-discharge cycle was performed 2000 cycles. After 2000 cycles, the discharge capacity was measured under the same conditions as those in the initial discharge capacity confirmation test, and the discharge capacity at this time was defined as the "discharge capacity after 2000 cycles". The percentage of the "discharge capacity after 2000 cycles" to the "initial discharge capacity" was defined as the capacity retention ratio after charge-discharge cycles.

### (Initial power performance in low temperature environment)

The initial power performance [W] in a low temperature environment was evaluated by the following procedure.

Each of the nonaqueous electrolyte energy storage devices after the measurement of "initial discharge capacity" was subjected to constant current constant voltage (CCCV) charge until the charge time reached a total of 3 hours under the conditions of a charge current of 1.0 C and an end-of-charge voltage of 4.10 V in an environment of 25°C, followed by a rest period of 5 minutes. Thereafter, constant current (CC) discharge was performed under the conditions of a discharge current of 1.0 C and an end-of-discharge voltage of 2.75 V, and the "discharge capacity at 1.0 C in an environment of 25°C" was measured. Next, the amount of electricity to be a half of this "discharge capacity at 1.0 C in an environment of 25°C" was defined as SOC 50%, constant current charge was performed from a completely discharged state to the SOC 50% at a charge current of 1.0 C. Thereafter, the battery was stored in an environment of 0°C for 5 hours, and then discharged at a discharge current of 0.2 C for 10 seconds, followed by a rest period of 5 minutes. Thereafter, the discharge current was adjusted to 0.6 C and 1.0 C, discharging was performed for 10 seconds each, followed by a rest period of 5 minutes. After the completion of each of the discharges, the energy storage device was subjected to constant current charge at a current of 1.0 C to adjusted the SOC to 50%. Low-temperature initial power performance [W] at 0°C was calculated from the current in each discharge and the voltage at 10 seconds after the start of discharge.

The capacity retention ratio after charge-discharge cycles and the low-temperature initial power performance at 0°C are shown in Table 1.

**[Table 1]**

| | Negative active material layer | Nonaqueous electrolyte | | | | Evaluation | |
|---|---|---|---|---|---|---|---|
| | BET specific surface area [m²/g] | Content (remaining amount) after initial charge-discharge | | | | Capacity retention ratio after 2000 cycles of charge-discharge cycle at 0°C [%] | Low-temperature initial power performance at 0°C [W] |
| | | Content [mol/dm³] | | Mole ratio | | | |
| | | Unsaturated cyclic carbonate | Fluorophosphate | Unsaturated cyclic carbonate | Fluorophosphate | | |
| Example 1 | **1.085** | **1.6 × 10⁻⁴** | **8.2 × 10⁻⁵** | **0.65** | **0.35** | **89** | **836** |
| Example 2 | **1.085** | **2.2 × 10⁻⁴** | **7.4 × 10⁻⁵** | **0.75** | **0.25** | **89** | **818** |
| Comparative Example 1 | **1.085** | **4.2 × 10⁻⁵** | **6.9 × 10⁻⁵** | **0.37** | **0.63** | **81** | **803** |
| Comparative Example 2 | **1.085** | **1.0 × 10⁻⁴** | **7.3 × 10⁻⁵** | **0.57** | **0.43** | **84** | **798** |
| Comparative Example 3 | **0.665** | **5.2 × 10⁻⁵** | **8.2 × 10⁻⁵** | **0.38** | **0.62** | **90** | **707** |
| Comparative Example 4 | **0.665** | **1.1 × 10⁻⁴** | **8.4 × 10⁻⁵** | **0.56** | **0.44** | **85** | **692** |
| Comparative Example 5 | **0.665** | **1.8 × 10⁻⁴** | **8.6 × 10⁻⁵** | **0.68** | **0.32** | **80** | **673** |
| Comparative Example 6 | **0.665** | **2.4 × 10⁻⁴** | **8.5 × 10⁻⁵** | **0.74** | **0.26** | **79** | **661** |

As shown in Table 1, in all of Example 1, Example 2, Comparative Example 1, and Comparative Example 2, the BET specific surface area of each negative active material layer is 0.80 m²/g or more and 1.5 m²/g or less. In each of the nonaqueous electrolyte energy storage devices of Example 1 and Example 2 in which the BET specific surface area of the negative active material layer was 0.80 m²/g or more and 1.5 m²/g or less, and the ratio (mole ratio) of the content of VC as an unsaturated cyclic carbonate to the total content of VC and LiDFP as a P-O bond-containing fluorophosphate was 0.6 or more and less than 1.0, the capacity retention ratio after charge-discharge cycles and the initial power performance in a low temperature environment were high values.

On the other hand, each of the nonaqueous electrolyte energy storage devices of Comparative Example 1 and Comparative Example 2 in which the ratio (mole ratio) of the content of VC to the total content of VC and LiDFP was less than 0.6 even when the BET specific surface area of the negative active material layer was 0.80 m²/g or more and 1.5 m²/g or less, exhibited low values in the capacity retention ratio after charge-discharge cycles and the initial power performance in a low temperature environment as compared with the nonaqueous electrolyte energy storage devices in Example 1 and Example 2.

In all of Comparative Examples 3 to 6, the BET specific surface area of each negative active material layer is less than 0.80 m²/g. All the nonaqueous electrolyte energy storage devices in Comparative Examples 3 to 6 exhibited low values in the initial power performance in a low temperature environment.

Furthermore, each of the nonaqueous electrolyte energy storage devices in Comparative Example 3 and Comparative Example 4 in which the ratio (mole ratio) of the content of VC to the total content of VC and LiDFP was less than 0.6, exhibited higher capacity retention ratio after charge-discharge cycles than each of the nonaqueous electrolyte energy storage devices in Comparative Example 5 and Comparative Example 6 in which the ratio (mole ratio) of the content of VC was 0.6 or more and less than 1.0, and the tendency opposite to those in Example 1, Example 2, Comparative Example 1, and Comparative Example 2 in which the BET specific surface area of each negative active material layer was 0.80 m²/g or more and 1.5 m²/g or less, was observed. This is presumed to be because in each of Comparative Example 3 to Comparative Example 6 in which the BET specific surface area of the negative active material layer is less than 0.80 m²/g, the reaction area of the negative active material layer is relatively small, and thus when the ratio (mole ratio) of the content of VC to the total content of VC and LiDFP is too large, the remaining VC is consumed on the newly formed surface of the negative active material as the charge-discharge cycle progresses, whereby the VC-derived coating film becomes thick, and the increase in resistance is accelerated, as a result of which the capacity retention ratio after charge-discharge cycles decreases.

As seen from the results, the nonaqueous electrolyte energy storage device according to the present invention has an excellent capacity retention ratio after charge-discharge cycles and excellent power performance in a low temperature environment.

### INDUSTRIAL APPLICABILITY

The present invention is suitably used as a nonaqueous electrolyte energy storage device including a nonaqueous electrolyte secondary battery used as a power source that requires quick charge, for electronic devices such as personal computers and communication terminals, automobiles such as EVs, HEVs, and PHEVs, and the like.

In addition, preferable applications of the present invention include a large-size lithium ion secondary battery. Examples thereof include a large-size lithium ion secondary battery that is a large-capacity type battery with a battery capacity of 5.0 Ah or more (for example, 5.0 Ah or more and 100 Ah or less) and is assumed to be used in a charge-discharge cycle including large current discharge of 3 C or more (for example, from 3 C to 50 C). The nonaqueous electrolyte energy storage device according to the present invention can be suitably applied to the large lithium ion secondary battery described above because of its excellent capacity retention ratio during charge-discharge cycles.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device, comprising:
a negative electrode including a negative active material layer; and
a nonaqueous electrolyte containing an unsaturated cyclic carbonate and a P-O bond-containing fluorophosphate,
wherein the negative active material layer has a BET specific surface area of 0.80 m²/g or more and 1.5 m²/g or less, and
a ratio of a content of the unsaturated cyclic carbonate to a total content of the unsaturated cyclic carbonate and the P-O bond-containing fluorophosphate is 0.60 or more and less than 1.0 on a mole basis.

2. The nonaqueous electrolyte energy storage device according to claim 1, wherein a content of the unsaturated cyclic carbonate in the nonaqueous electrolyte is 1.4 × 10⁻⁴ mol/dm³ or more and 2.8 × 10⁻⁴ mol/dm³ or less.

3. The nonaqueous electrolyte energy storage device according to claim 1 or 2, wherein a content of the P-O bond-containing fluorophosphate in the nonaqueous electrolyte is 1.1 × 10⁻⁴ mol/dm³ or less.

4. The nonaqueous electrolyte energy storage device according to claim 1 or 2, wherein
the unsaturated cyclic carbonate is vinylene carbonate, and
the P-O bond-containing fluorophosphate is lithium difluorophosphate.
